Europäisches Patentamt

European Patent Office

Office européen des brevets

(11) Veröffentlichungsnummer: **0 166 229**
**A2**

(12) # EUROPÄISCHE PATENTANMELDUNG

(21) Anmeldenummer: 85106441.0

(51) Int. Cl.⁴: **G 01 J 5/52**

(22) Anmeldetag: 24.05.85

(30) Priorität: 18.06.84 DE 3422590

(43) Veröffentlichungstag der Anmeldung: 02.01.86 Patentblatt 86/1

(84) Benannte Vertragsstaaten: **FR GB IT SE**

(71) Anmelder: **MANNESMANN Aktiengesellschaft, Mannesmannufer 2, D-4000 Düsseldorf 1 (DE)**

(72) Erfinder: **Kolz, Helmut, Dipl.-Ing., Brückenstrasse 14a, D-5000 Köln 50 (DE)**

(74) Vertreter: **König, Reimar, Dr.-Ing. et al, Patentanwälte Dr.-Ing. Reimar König Dipl.-Ing. Klaus Bergen Wilhelm-Teil-Strasse 14 Postfach 260162, D-4000 Düsseldorf 1 (DE)**

(54) **Verfahren zum pyrometrischen Temperaturmessen.**

(57) Bei einem Verfahren zum pyrometrischen Messen der wahren Temperatur mit Emissionsausgleich durch Zustrahlen und Mehrfachreflexion ist im Abstand von der Meßgutoberfläche eine Ergänzungsfläche (2) mit einer Meßöffnung (3) angeordnet, durch die ein Meßstrahl der Optik eines Pyrometers (4) zugeführt wird.

Dr.-Ing. Reimar König · Dipl.-Ing. Klaus Bergen

0166229

- 1 -                                    36 074 X

Mannesmann Aktiengesellschaft, Mannesmannufer 2,
=====================================================

4000 Düsseldorf 1
==================

"Verfahren zum pyrometrischen Temperaturmessen"

Die Erfindung bezieht sich auf ein Verfahren zum pyrometrischen Messen der wahren Temperatur mit Emissionsausgleich durch Aufprojektion eines Strahlers.

Die Temperaturmessung mit Strahlungspyrometern hat sich überall dort bewährt, wo die zu messende Temperatur für die Verwendung von Berührungsthermometern zu hoch ist und/oder die Meßgutoberfläche beispielsweise wegen ihrer Empfindlichkeit nicht direkt zugänglich ist. Ein weiterer Vorteil der Strahlungspyrometer liegt darin, daß sie zufolge der zulässigen Meßentfernung das Temperaturfeld des Meßguts nicht verändern; ihr wesentlicher Nachteil resultiert jedoch daraus, daß es sich bei dem Meßgut in aller Regel nicht um ideale bzw. schwarze Strahler mit einem Emissionsgrad von 1 handelt. Hinzu kommt, daß der Emissionsgrad nichtschwarzer Körper von deren Temperatur, der Wellenlänge sowie von der Zusammensetzung des Meßguts und dessen Oberflächenbeschaffenheit abhängig ist. Die bekannten Gesamtstrahlungs-, Teilstrahlungs- und Farbpyrometer begegnen den hiervon ausgehenden Störeinflüssen auf sehr unterschiedliche Weise, ohne jedoch die aus den Emissionsgradschwankungen resultierenden Meßfehler voll ausgleichen zu können.

Eine weitere Fehlerursache ist beim Temperaturmessen in Öfen, beispielsweise Glühöfen, der von der Ofenwandung ausgehende Einfluß. Übersteigt nämlich beispielsweise die Wandtemperatur die Meßguttemperatur, dann läßt sich nur bei

- 2 -

einem Emissionsgrad von 1 oder bei einem grauen Strahler die Meßguttemperatur fehlerfrei messen. Bei dem üblichen geringeren Strahlungsvermögen des Glühguts, beispielsweise Bandstahl, nimmt das Strahlungspyrometer hingegen eine entsprechend geringere Strahlungsenergie, zusätzlich aber auch noch durch Reflexion am Meßgut einen Teil der Ofenwandstrahlung auf. Demgemäß nimmt die am Pyrometer abgelesene Temperatur mit fallender Meßguttemperatur und abnehmendem Emissionsgrad des Meßguts zu. Dieses Verhältnis kehrt sich um, wenn die Meßguttemperatur über der Wandtemperatur liegt.

Da zwischen den Temperaturen des Meßguts und der Ofenwandung praktisch immer ein sich häufig auch ändernder Unterschied besteht, lassen sich die aus dem Wandeinfluß resultierenden Meßfehler nur durch aufwendige Abschirmmaßnahmen vermeiden bzw. ausgleichen. Das geht soweit, daß ein Pyrometer beim Einbringen eines kalten Meßguts in einen Ofen je nach Wandtemperatur mehrere hundert Grad mißt, weil in diesem Fall die Wandstrahlung gegenüber der Meßgutstrahlung bei weitem überwiegt. Mit zunehmender Meßguttemperatur nimmt der Fehler zwar ab; er bleibt jedoch je nach dem sich auch ändernden Strahlungsvermögen des Meßguts und der Ofenwandung erhalten, so daß die Temperaturanzeige mehr oder minder stark von der tatsächlichen Meßguttemperatur abweicht.

Unter den Vorschlägen, den Emissionsgrad des Meßguts zu berichtigen bzw. auf den eines Schwarzstrahlers einzustellen, bedient sich ein bekanntes Verfahren eines aktiven Hilfsstrahlers, dessen Strahlen senkrecht auf die Meßgutoberfläche fallen. Dieses Verfahren basiert auf der Überlegung, daß sich beim Aufprojizieren des Vergleichsstrahlers das Reflexionsvermögen und der Emissionsgrad zu 1 addieren, mithin die Strahldichte eines Schwarzstrahlers vorliegt.

0166229

Mit dem Emissionsausgleich durch Aufprojektion läßt sich zwar eine weitgehende Annäherung der pyrometrisch gemessenen Temperatur an die wahre Meßguttemperatur erreichen. der Nachteil dieses Verfahrens besteht aber darin, daß es sehr heiße, teure und empfindliche Vergleichsstrahler erfordert, um die für das Meßergebnis wesentliche Temperaturdifferenz zwischen dem Hilfsstrahler und dem Meßgut möglichst gering zu halten. Derartige Strahler, beispielsweise Xenon- und Wolfram-Bandlampen eignen sich auch kaum für eine Anwendung bei großtechnischen Verfahren, insbesondere im rauhen Glühbetrieb, da sie sich kaum in der Nähe des Glühguts anordnen lassen. Das ist aber erforderlich, weil zwischen der Meßdistanz und der zulässigen Abweichung der Hilfsstrahlerstrahlung von der Senkrechten zur Meßgutebene ein bestimmter Zusammenhang besteht.

Ein weiterer Nachteil des bekannten Verfahrens besteht darin, daß es entsprechend dem Abstand zwischen Vergleichsstrahler und Meßgut erforderlich ist, beispielsweise mit Hilfe von Kollimatoren dem gesamten, vom Pyrometer zu beobachtenden Meßfleck eine der Strahlung des schwarzen Körpers bei der Temperatur des Meßguts entsprechende Strahldichte zuzustrahlen. Das ist bei Bandlampen schwierig, weil es sich dabei nicht um flächenhafte Strahler handelt und daher mit einem variablen Abstand Meßfläche/Strahler gerechnet werden muß. Bei der Verwendung von Reflektoren kann es am Meßort auch zu einer Überstrahlung, d.h. zu einer Strahlungsdichte über der des schwarzen Körpers kommen.

Des weiteren ist es erforderlich, die Strahlertemperatur fortlaufend mit der Meßflecktemperatur zu vergleichen. Um Fehler zu vermeiden, müßte das mit einer einzigen Meßzelle geschehen, die jedoch eine eigene Optik erfordert. Gleichwohl ergeben sich Schwierigkeiten aufgrund der Tatsache, daß sich bei technischen Körpern die Reflexion aus einem gerichteten und einem diffusen Anteil zusammensetzt. Die Anteile sind jedoch unbekannt und zudem sowohl richtungsals auch temperaturabhängig. Das Verfahren eignet sich daher nur für ein Meßgut mit ausschließlich gerichteter Reflexion.

Schließlich muß auch das Emissionsspektrum der Bandlampe genau mit dem Meßband des Pyrometers übereinstimmen. Bei der Verwendung mehrerer Bandlampen müssen alle mitgemessen werden. Eine etwaige Polarisation im Strahlenbündel der Bandlampe führt zudem zu Meßfehlern.

Hinzu kommt, daß sich beim pyrometrischen Messen mit derartigen Hilfsstrahlern der Wandeinfluß eines Ofens nicht ausschalten oder doch wenigstens minimieren läßt, weil die Wandstrahlung nach wie vor auf die Meßgutoberfläche trifft und dort reflektiert wird.

Der Erfindung liegt daher die Aufgabe zugrunde, die vorerwähnten Nachteile des Temperaturmessens mit Emissionsausgleich durch Aufprojektion eines aktiven Hilfsstrahlers zu beseitigen und dabei gegebenenfalls auch den das Meßergebnis verfälschenden Wandeinfluß weitestgehend auszuschalten.

Die Lösung dieser Aufgabe basiert auf dem Gedanken, anstelle eines aktiven Strahlers eine strahlende und gleichzeitig reflektierende Fläche zu verwenden, um das Emissionsvermögen des Meßguts dem eines Schwarzstrahlers anzugleichen.

Im einzelnen besteht die Erfindung darin, daß bei einem Verfahren der eingangs erwähnten Art im Abstand von der Meßgutoberfläche eine Ergänzungsfläche mit einer Meßöffnung angeordnet ist, durch die ein vom Meßgut ausgehender Meßstrahl der Optik eines Pyrometers zugeführt wird. Dabei besteht die Ergänzungsfläche vorzugsweise aus einem emissionsgleichen oder auch emissionsähnlichen Material, im Falle eines Glühofens, beispielsweise eines Durchlaufglühofens für Stahlband, aus einer Metallfläche.

Die Ergänzungsfläche ergänzt durch Zustrahlung und Mehrfach reflexion das Emissionsvermögen der Meßgutoberfläche im Idealfall zu eins; sie sollte möglichst groß sein, um auf einfache Weise ein möglichst kleines Verhältnis des Abstandes von der Meßgutoberfläche zur Ausdehnung der Ergänzungsfläche zu erreichen. Bei einer derartigen Ergänzungsfläche resultiert die Emissionsgrad-Verbesserung daraus, daß sich beide Oberflächen außer ihrer eigenen, temperaturbedingten Strahlung im Wege einer Reflexion auch die von der Gegenfläche empfangene Strahlung gegenseitig zustrahlen. Das führt bei gleicher Flächentemperatur dazu, daß die von den beiden Flächen abgegebene Strahlungsenergie unabhängig vom Emissionsgrad ist, so daß sich praktisch die Verhältnisse eines Schwarzstrahlers ergeben.

Die Abmessungen der Ergänzungsfläche und deren Abstand von der Meßgutoberfläche richten sich nach den örtlichen Gegebenheiten. Dabei sollte jedoch das Abstandsvolumen zwischen Meßgutoberfläche und Vergleichsfläche möglichst gering und die Abmessungen der Ergänzungsfläche möglichst groß sein, um eine möglichst weitgehende Aufbesserung des Emissionsgrades und gleichzeitig den Einfluß der Ofenwandstrahlung weitestgehend auszuschalten. Das Maß der $\varepsilon$-Aufbesserung bestimmt sich bei kreisförmigen Flächen nach der Gleichung b = h/r und bei anders begrenzten Flächen nach der Gleichung b $= \frac{h}{\sqrt{F}}$, wobei h der Abstand zwischen der Ergänzungsfläche und dem Meßgut, r der Durchmesser und F die Größe der Ergänzungsfläche sind. Vorteilhafterweise beträgt das Abstandsvolumen b $< \frac{\varepsilon}{2,5}$.

Da sich das Meßgut und die Ergänzungsfläche in unmittelbarer Nachbarschaft befinden, ist die Temperaturdifferenz normalerweise schon äußerst gering. Sofern das jedoch nicht der Fall ist, kann die Ergänzungsfläche gekühlt oder auch beheizt werden. Das stößt auf keine Schwierigkeiten, weil sich eine solche Ergänzungsfläche ohne weiteres mit Kühl- oder Heizgas oder auch durch Strahlung beaufschlagen sowie mit Kühl- oder Heizelementen versehen läßt und auch ein genaues Messen bzw. Regeln der Temperatur mit Hilfe eines Berührungsthermometers, beispielsweise eines Thermoelements gestattet.

Andererseits besteht aber auch die Möglichkeit, den Strahlungsanteil der Ergänzungsfläche aufgrund deren exakt gemessener Temperatur für den Fall gleicher Emissionsgrade rechnerisch zu bestimmen.

Die Kontur der Ergänzungsfläche richtet sich nach der Meßgutkontur; so empfiehlt sich beim Temperaturmessen an Blechen oder Band eine ebene Vergleichsfläche, wenngleich auch ein Messen mit Hilfe einer beispielsweise halbkreisförmig gekrümmten oder kalottenförmigen Vergleichsfläche möglich ist. Maßgebend für das Meßergebnis ist die Umrißlinie bzw. -kante der Ergänzungsfläche, die in einer Ebene parallel zur Meßgutoberfläche liegen sollte; im übrigen kann die Ergänzungsfläche beliebig verlaufen, beispielsweise kalottenförmig gekrümmt sein. Entscheidend ist allein die Spaltbreite zwischen der Umrißlinie der Ergänzungsfläche und der Meßgutoberfläche.

Zur Durchführung des erfindungsgemäßen Verfahrens eignet sich in besonderem Maße eine Meßkammer mit einer als Ergänzungsfläche mit einer Meßöffnung ausgebildeten, der Optik eines Pyrometers einerseits und der Meßgutoberfläche andererseits gegenüberliegenden Kammerwandung. Eine derartige Meßvorrichtung erlaubt eine besonders feinfühlige Temperaturführung beispielsweise mit Hilfe besonderer Kühl- und/oder Heizelemente oder auch eines Kühl- oder Heizgases.

Bei einer derartigen Meßkammer beträgt der Kammerdurchmesser senkrecht zur Meßstrahlachse vorzugsweise das bis Zehnfache des Abstandes zwischen der Meßgutoberfläche und der Ergänzungsfläche.

Das erfindungsgemäße Verfahren eignet sich beispielsweise zur Verwendung beim Glühen von Band aus Tiefziehstahl, bei dem das rasche Erwärmen auf die Glühtemperatur und das ebenso rasche Abkühlen besonders kritisch sind und die Gefahr einer zu hohen Streckgrenze sowie einer Reckalterung besteht; das gilt ganz besonders auch für Band aus aluminiumberuhigtem Stahl.

Das erfindungsgemäße Verfahren eignet sich darüber hinaus auch zum Überwachen der Oberflächentemperatur beim Blankglühen von Kaltband, der Walzentemperatur beim Prägen von Kunststoffband sowie der Temperatur von Maschinen wie beispielsweise Förderbänder in explosionsgefährdeter Umgebung.

Die Erfindung wird nachfolgend anhand dreier in der Zeichnung dargestellter Ausführungsbeispiele des näheren erläutert. In der Zeichnung zeigen:

Fig. 1    eine Meßanordnung mit einer ebenen Ergänzungsfläche nach der Erfindung,

Fig. 2    eine Meßkammer mit beheizter Ergänzungsfläche und

Fig. 3    eine Meßkammer mit einer Ausbauschleuse für das Pyrometer, jeweils in schematischer Darstellung.

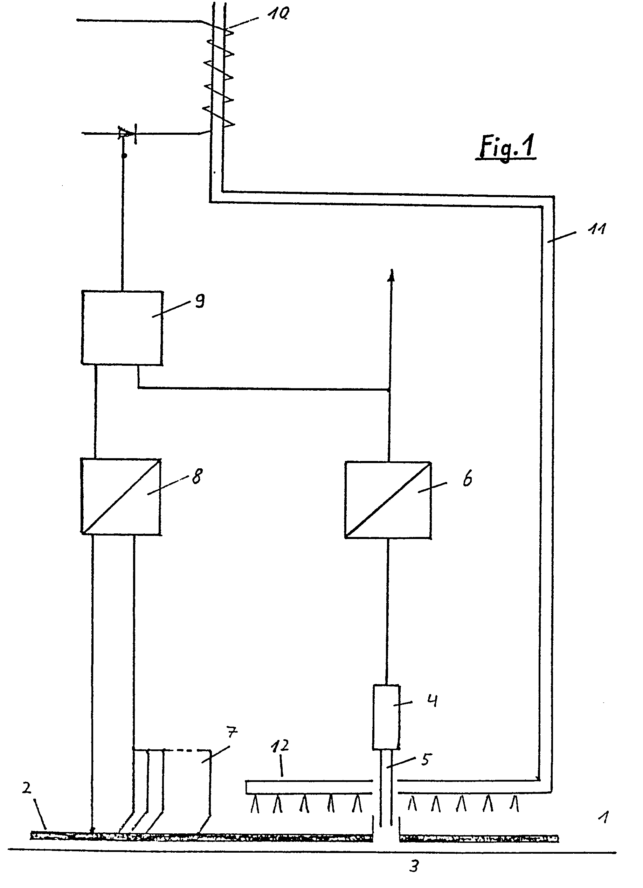

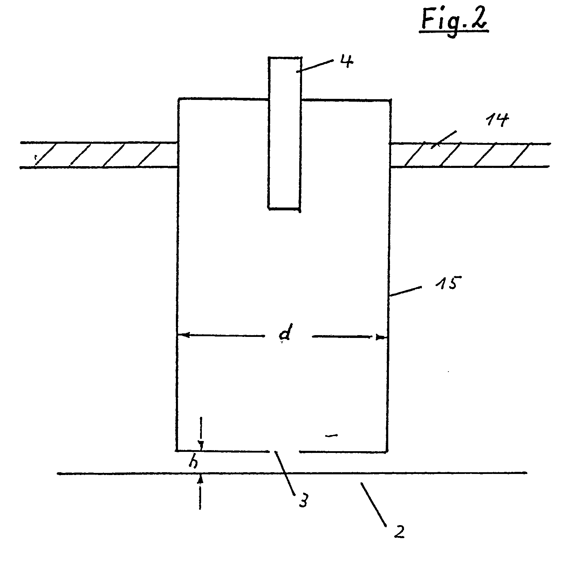

Das Ausführungsbeispiel der Fig. 1 bezieht sich auf eine Durchlaufglühe, bei der ein endloses Stahlband 1 kontinuier-

- 8 -

lich durch einen nicht dargestellten Glühofen geführt und dabei nach vorgegebenem Plan beispielsweise rekristallisierend und alternd geglüht wird. Parallel und mit geringem Abstand von dem Stahlband 1 ist eine Ergänzungsfläche 2 mit einer Meßöffnung 3 angeordnet, in der ein zu einem optischen Pyrometer 4 führender Lichtleiter 5 mündet. Der Pyrometerausgang ist über einen Meßwertwandler 6 auf ein nicht dargestelltes Anzeigegerät für die Ware Meßgut- bzw. Stahlbandtemperatur geschaltet.

Mit der Ergänzungsfläche 2 befindet sich ein Thermoelement 7 mit mehreren Schenkeln in Kontakt, dessen Ausgang über einen Meßwertwandler 8 auf einen Regler 9 geschaltet ist, der die Leistung eines Heizelements 10 in Abhängigkeit von der tatsächlichen Temperatur der Ergänzungsfläche und der am Pyrometer gemessenen Meßguttemperatur steuert. Dazu ist der Ausgang des Meßwertwandlers 6 ebenfalls auf den Regler 9 geschaltet.

Das Heizelement 10 umgibt eine Schutzgaszuleitung 11, die zu Düsenrohren 12 führt, deren Düsen auf die Rückseite der Ergänzungsfläche 2 gerichtet sind. Das aus den Düsen austretende Schutzgas dient zum Einstellen der Temperatur der Ergänzungsfläche 2 auf die jeweils mittels des Pyrometers 4 gemessene Temperatur des Stahlbandes 1.

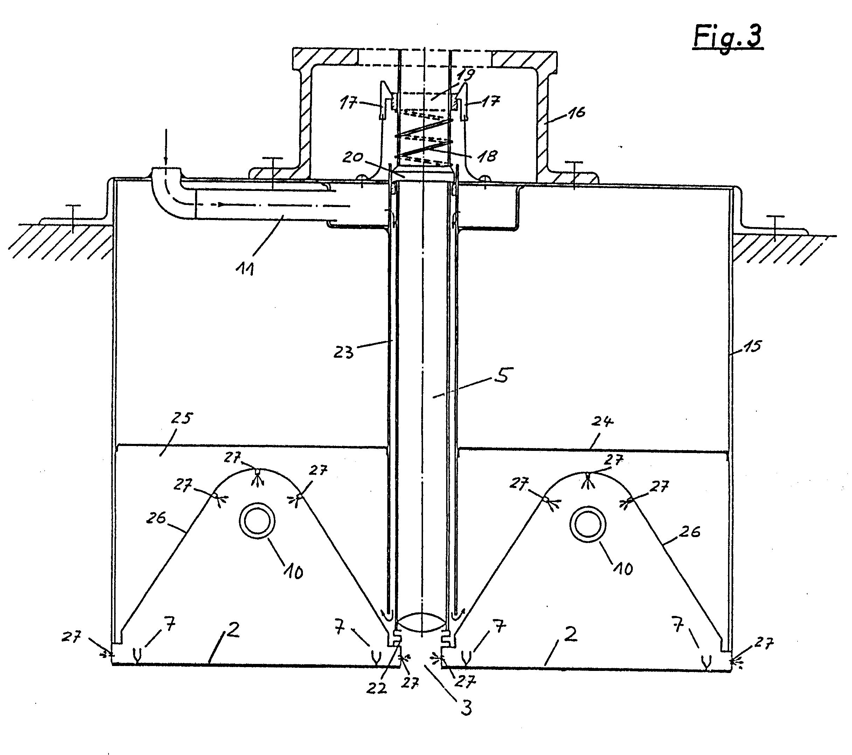

Das Ausführungsbeispiel der Fig. 2 unterscheidet sich von dem Ausführungsbeispiel der Fig. 1 im wesentlichen nur dadurch, daß die Ergänzungsfläche 2 Bestandteil einer eine Ofenwandung 14 durchragenden Meßkammer 15 ist, deren Durchmesser d in der Weise auf den Abstand h zwischen der Ergänzungsfläche 2 und dem Stahlband 1 abgestimmt ist, daß sich ein Verhältnis von höchstens 10 ergibt. Die Verwendung einer Meßkammer bringt den Vorteil einer einfacheren Temperaturregelung für die Ergänzungsfläche 2 mit sich.

Die Meßkammer 15 der Fig. 3 weist eine mit einem nicht dargestellten Deckel versehene Ein- und Ausbauschleuse 16 auf. In der Schleuse befinden sich zwei federnde Spannklammern 17, die einen auf dem oberen Ende eines Lichtleiterstabes 5 geführten, auf einer Spiralfeder 18 abgestützten Stützring 19 halten. Der Stützring 19 hält den Lichtleiterstab 5 mittels der an einem Bund 20 anliegenden Feder 18 axial beweglich in seiner Arbeitsstellung, in der er mit seinem vorderen, mit einer Linse 21 versehenen Ende an einem balgenähnlichen Rohrstutzen 22 im Meßkammerboden anliegt. Die Spiralfeder 18 nimmt die Wärmedehnung des Lichtleiterstabes 5 auf; dieser ist mit Abstand in einem ortsfesten unten offenen Kühlrohr 23 angeordnet, das seinerseits mit einer Schutzgasleitung 11 verbunden ist.

Die Meßkammer 15 ist durch eine Zwischenwand 24 horizontal unterteilt und weist in der unteren Teilkammer 25 zwei Reflektoren 26 auf, in deren Brennpunkten je ein Heizelement 10 angeordnet ist. Die Reflektoren 26, die Meßkammerwandung und der Rohrstutzen 22 weisen Düsenöffnungen 27 auf, durch die das Schutzgas austritt.

Das kalte Schutzgas dient zunächst dazu, den Lichtleiterstab 5 zu kühlen; es verläßt dann den Ringraum zwischen dem Kühlrohr 23 und dem Lichtleiterstab 5 und gelangt zunächst in die untere Teilkammer 25. Von der unteren Teilkammer 25 strömt das Schutzgas durch die Düsenöffnungen 27 in den Reflektoren 26 zu den Heizelementen 10 und von dort mit entsprechend hoher Temperatur zu der Ergänzungsfläche, bis es schließlich die untere Teilkammer 25 über die nach außen führenden Düsenöffnungen 27 verläßt. Mit Hilfe des Schutzgases wird somit nicht nur der Lichtleiterstab 5 gekühlt, sondern auch die Temperatur der Ergänzungsfläche 2 zuverlässig eingestellt.

Dr.-Ing. Reimar König · Dipl.-Ing. Klaus Bergen

Wilhelm-Tell-Str. 14 · 4000 Düsseldorf 1 · Telefon 38 70 26 · Patentanwälte

0166229

Mannesmann Aktiengesellschaft, Mannesmannufer 2,
===================================================

4000 Düsseldorf 1
=================

"Verfahren zum pyrometrischen Temperaturmessen"

Patentansprüche:

1. Verfahren zum pyrometrischen Messen der wahren Temperatur mit Emissionsausgleich durch Aufprojektion eines Strahlers, dadurch gekennzeichnet, daß im Abstand von der Meßgutoberfläche eine Ergänzungsfläche mit einer Meßöffnung angeordnet ist, durch die ein Meßstrahl der Optik eines Pyrometers zugeführt wird.

2. Verfahren nach Anspruch 1, dadurch gekennzeichnet, daß die Ergänzungsfläche auf derselben Temperatur wie das Meßgut gehalten wird.

3. Verfahren nach Anspruch 2, dadurch gekennzeichnet, daß die Ergänzungsfläche gekühlt oder beheizt wird.

4. Verfahren nach einem der Ansprüche 1 bis 3, dadurch gekennzeichnet, daß der Abstand zwischen der Meßgutoberfläche und der Ergänzungsfläche in allen Punkten gleich ist.

5. Verfahren nach einem der Ansprüche 1 bis 3, dadurch gekennzeichnet, daß die Ergänzungsfläche halbkreis- oder kalottenförmig gekrümmt ist.

6. Vorrichtung zur Durchführung des Verfahrens nach den Ansprüchen 1 bis 5, gekennzeichnet durch eine mit einer Meßöffnung (3) versehene Ergänzungsfläche (2) und ein in der Achse der Meßöffnung angeordnetes optisches Pyrometer (4).

7. Vorrichtung nach Anspruch 6, gekennzeichnet durch eine Meßkammer (15) mit einer als Ergänzungsfläche (2) mit einer Meßöffnung (3) ausgebildeten, der Optik eines Pyrometers (4) gegenüberliegenden Kammerwandung.

8. Vorrichtung nach Anspruch 7, dadurch gekennzeichnet,- daß der Kammerdurchmesser d senkrecht zur Meßstrahlachse das bis Zehnfache des Abstandes h zwischen der Meßgutoberfläche und der Ergänzungsfläche (2) beträgt.

9. Vorrichtung nach einem der Ansprüche 6 bis 8, dadurch gekennzeichnet,daß die Ergänzungsfläche (2) oder die Kammer (15) mit Kühl- und/oder Heizelementen (12;10) versehen ist.

10. Vorrichtung nach Anspruch 9, dadurch gekennzeichnet,- daß auf einen Regler (8) für ein Heizelement (10) geschaltete Temperaturfühler (7) mit der Ergänzungsfläche (2) verbunden sind und das Heizelement eine zu Düsenrohren (12) führende Schutzgasleitung (11) umgibt.

11. Vorrichtung nach einem der Ansprüche 6 bis 10,dadurch gekennzeichnet, daß sich zwischen der Meßöffnung (3) und dem Pyrometer (4) ein Lichtleiter (5) erstreckt und/oder der Pyrometerausgang über einen Meßwertwandler (6) auf den Regler (9) für das Heizelement (10) geschaltet ist.

12. Vorrichtung nach einem oder mehreren der Ansprüche 6
    bis 11, gekennzeichnet durch die Verwendung eines
    Verhältnispyrometers (4).

0166229

Fig.1

0166229

Fig.2

Fig.3

0166229